# EUROPEAN PATENT APPLICATION

(11) **EP 2 600 222 A2**
(43) Date of publication of application: **05.06.2013**
(21) Application number: 12166328.0
(22) Date of filing: 02.05.2012
(51) Int. Cl.: G06F 3/0354

(54) **Mouse device**

(30) Priority: 02.12.2011 TW 100144542
(71) Applicant: Giga-Byte Technology Co., Ltd., New Taipei City 231 (TW)
(72) Inventor: Chen, Shu I, 231 Hsin Tien (TW)
(74) Representative: Schwerbrock, Florian

(57) **Abstract**

A mouse device includes a shell, a circuit board, an electrical switch, a button and a push block. The circuit board is disposed within the shell, and the electrical switch is electrically disposed on the electrical board. The button is disposed on the shell and faces the electrical switch on the electrical board and is configured to move with respect to the shell and optionally trigger the electrical switch. The push block is disposed on the button facing the electrical switch, wherein hardness of the push block is substantially greater than that of the button. While the button triggers the electrical switch, the push block presses the electrical switch, thereby preventing an unintentional contact of the button with the electrical switch.

## Description

### BACKGROUND OF THE INVENTION

### Field of the Invention

This invention is relative to a pointing device; in particular, relative to a mouse device in which a push block with higher hardness is configured to trigger an electrical switch directly.

### Description of the Prior Art

The mouse is a common peripheral input device of the computer system. It can track the user's control motion (usually detected by a trackball or optical detection unit) and the cursor on the operating window will be shifted corresponding to the control motion. Besides, the user can select any item on the operating window or execute commands during word processing or web browsing by clicking the buttons of the mouse device. The mouse device is more intuitive and easier to manipulate than the keyboard and is now in widespread use. As the graphics user interface (GUI) is the mainstream of the computer operating system, the mouse device has replaced the keyboard and becomes the necessary peripheral input device of the computer.

When the user presses a button of a mouse device, the button shifts down and triggers an electrical switch on a circuit board inside the mouse device, so the electrical switch is turned on and sends an electrical signal to a connected computer system. Then the computer system generates a click event on the screen of the display corresponding to the electrical signal. After the user releases the button, an open circuit is formed due to disappearance of the pressure. Meanwhile, the button generates a feedback force in response to the foregoing pressure and reverts to its original rest state. Thus a click is completed.

Because the user presses the buttons of the mouse device frequently, the buttons hit the electrical switches very often. The shell and the button of the mouse device are mainly made of Acrylonitrile Butadiene Styrene (ABS), making them lighter and cost reduced. However, the hardness of the button is not high enough so that the button may be sunken or distorted after hitting the electrical switch a lot of times. So, the button will not be sensitive as usual and it troubles the user's operation since he/she has to press the button harder in order to get a successful connection with the electrical switch.

In addition, distortion of the button may also get the button stuck in the electrical switch momentarily when triggering the electrical switch. Since the button can not revert to its original rest state smoothly by itself, the user has trouble with operating the mouse device normally.,It is also possible for the electrical switch to be touched by mistake under this condition. Besides, the service life of the mouse device will be shortened.

### SUMMARY OF THE INVENTION

In view of the foregoing, an object of the present invention is to provide a mouse device that has the merits of effective suppression of deformation and maintenance of sufficient sensitivity after long-term use.

The mouse device of the present invention includes a shell, a circuit board, an electrical switch, a button and a push block. The circuit board is disposed within the shell, and the electrical switch is configured electrically on the circuit board. The button is disposed on the shell facing the electrical switch on the circuit board and is configured to move with respect to the shell and optionally trigger the electrical switch. The push block is disposed on the button and faces the electrical switch, wherein hardness of the push block is substantially higher than that of the button. While the button triggers the electrical switch, the push block presses the electrical switch.

The effects of the present invention are as follows. The electrical switch is in fact triggered directly by the push block on the button rather than the button itself. The hardness of the push block is relatively higher than that of the electrical switch, so the push block will not be sunken or distorted easily under the influence of repeated button-clicks. This can maintain the sensitivity of the button of the mouse device and avoid the electrical switch from being touched mistakenly. Besides, it can also extend the service life of the mouse device.

Further objects, embodiments and advantages are apparent in the drawings and in the detailed description which follows.

### BRIEF DESCRIPTION OF THE DRAWINGS

These and other features and advantages of the various embodiments disclosed herein will be better understood with respect to the following description and drawings, in which like numbers refer to like parts throughout, and in which:
FIG. 1 illustrates an exploded view of a mouse device according to a first embodiment of the present invention;
FIG. 2 illustrates another exploded view of the mouse device according to the first embodiment of the present invention;
FIG. 3 illustrates a three-dimensional view of the mouse device according to the first embodiment of the present invention;
FIG. 4 illustrates a side view of the mouse device according to the first embodiment of the present invention;
FIG. 5 illustrates an enlarged view of the mouse device according to the first embodiment of the present invention;
FIG. 6 illustrates another enlarged view of the mouse device according to the first embodiment of the present invention;
FIG. 7 illustrates still another enlarged view of the mouse device according to the first embodiment of the present invention;
FIG. 8 illustrates schematically how the mouse device is operated according to the first embodiment of the present invention;
FIG. 9 illustrates an enlarged view of the mouse device according to a second embodiment of the present invention;
FIG. 10 illustrates another enlarged view of the mouse device according to the second embodiment of the present invention; and
FIG. 11 illustrates still another enlarged view of the mouse device according to the second embodiment of the present invention.

### DETAILED DESCRIPTION OF PREFERRED EMBODIMENTS

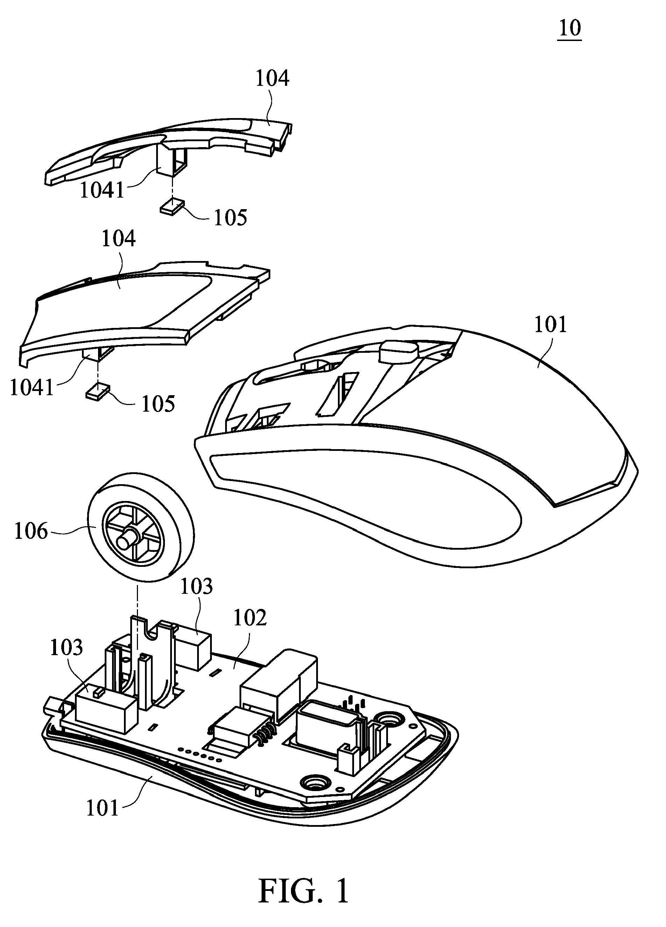

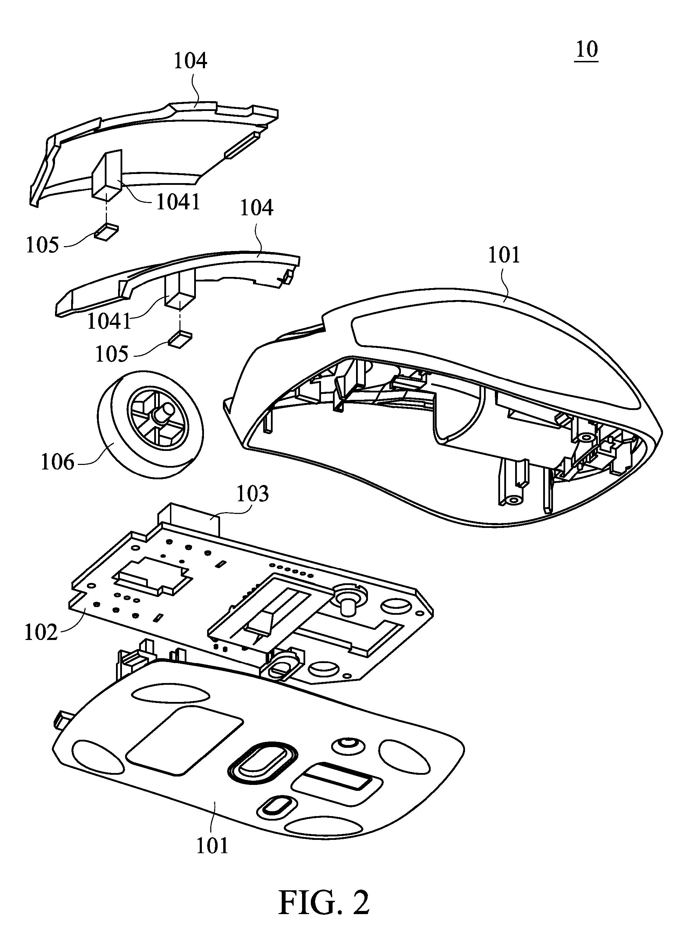

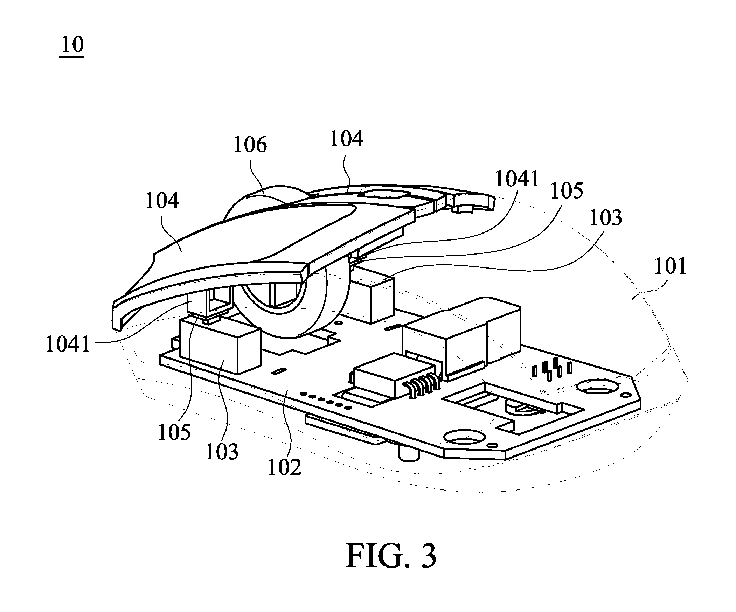

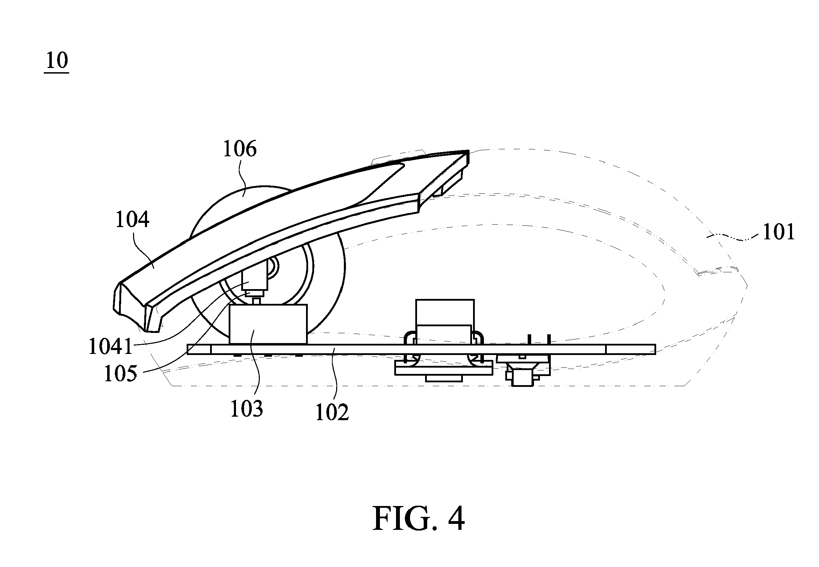

FIGs. 1 and 2 are different exploded views and FIGs. 3 and 4 are respectively a three-dimensional view and a side view of a mouse device 10 according to a first embodiment of the present invention. In the first embodiment, the mouse device 10 includes a shell 101, a circuit board 102, an electrical switch 103, a button 104, a push block 105 and a wheel 106. The circuit board 102 is disposed within the shell 101, and the electrical switch 103 is electrically configured on the circuit board 102. The button 104 is disposed on the shell 101 and has a percussion component 1041 facing the circuit board 102. As a whole, the percussion component 1041 is disposed inside the shell 101. The wheel 106 is disposed on the shell 101 and configured to revolve with respect to the shell 101 and output a signal to the computer system (not shown) to execute the default function such as the page scroll.

Both of the button 104 and percussion component 1041 correspond to the electrical switch 103 in position. The button 104 is pivoted on the shell 101 and configured to move back and forth with respect to the shell 101, while the percussion component 1041 is moved along with the button 104. Therefore, when the button 104 is depressed (toward the circuit board 102) to touch the electrical switch 103, the percussion component 1041 triggers the electrical switch 103. On the other hand, when the button 104 is in the rest state as usual, the percussion component 1041 will not turn on the electrical switch 103.

In the first embodiment, the mouse device 10 includes two buttons 104; that is, the right button and the left button. So there are two electrical switches 103 electrically configured on the circuit board 102 corresponding to the buttons 104 to perform the default function of the mouse device 10. However, the mouse device 10 of the present invention is not limited to that disclosed in the first embodiment. People with ordinary skill can modify the position and number of the button 104 together with the electrical switch 103 as desired, In addition, for example, the mouse device 10 can be a trackball or the like. It is to be noted that the button 104 is designed to correspond to the electrical switch 103 in both position and number no matter how the structure of the mouse device 10 changes.

Besides, it is noted that the shell 101, the button 104 and the percussion component 1041 are made of Acrylonitrile Butadiene Styrene (ABS) and formed by injection molding in the embodiment but the present invention is not limited thereto.

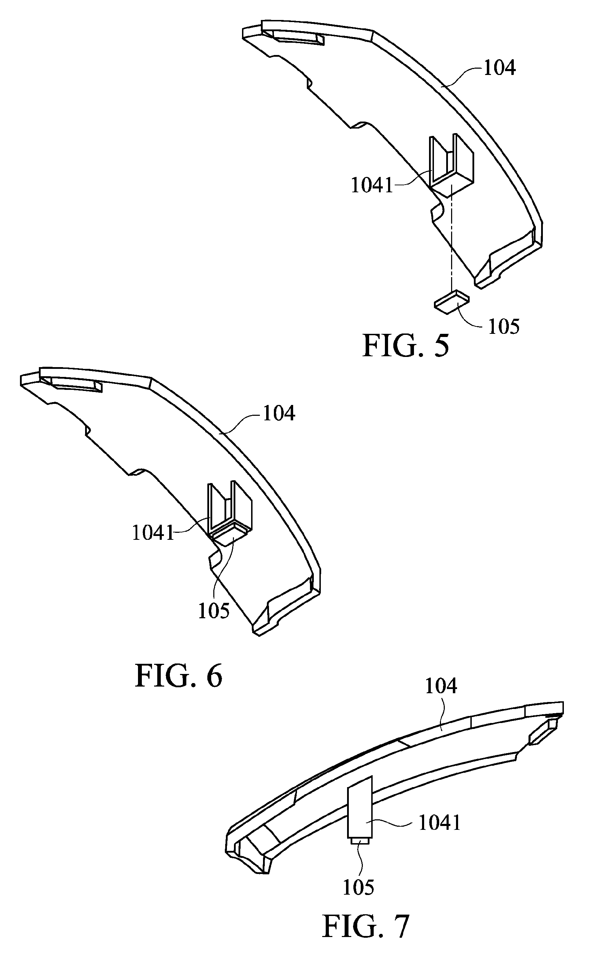

FIGs. 5 to 7 are different enlarged views of the mouse device 10 according to the first embodiment of the present invention. Referring to FIGs. 1-7, in the first embodiment, the push block 105 is disposed on a surface of the percussion component 1041 facing the electrical switch 103; that is to say, the push block 105 is disposed inside the shell 101. The push block 105 is fixed on the surface of the percussion component 1041 by adhesion in this embodiment, but the present invention is not limited thereto. Any other method that is capable of fixing the push block 105 on the percussion component 1041 of the button 104 may be used.

The push block 105 in this invention may be made of the material with high level of hardness including but not limited to metal, plastic-steel, Nylon, Teflon. Since the electrical switch 103 and button 104 are usually made of plastics, the push block 105 has substantially higher hardness than the electrical switch 103. However, preferably, the hardness of the push block 105 in this embodiment is only slightly greater than that of the electrical switch 103 and the button 104 for avoiding the deformation, abrasion, or breakdown of the electrical switch 103 cause by the push block 105 after long-term use of the button 104.

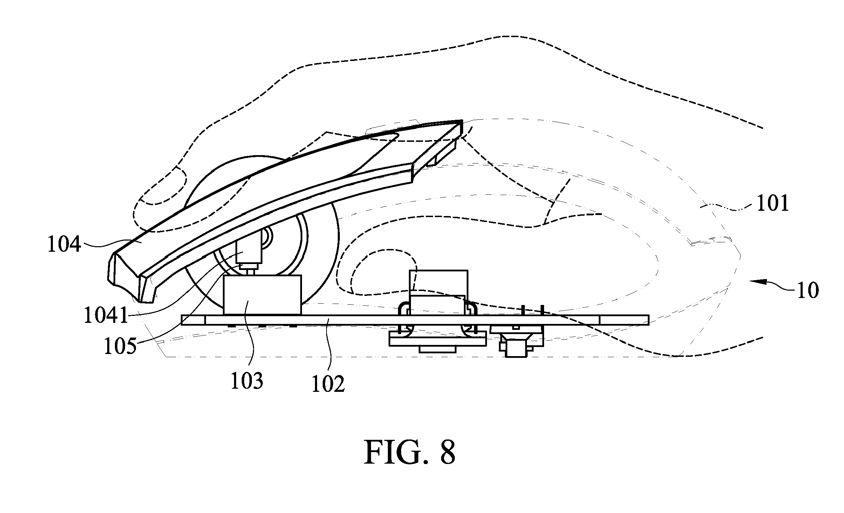

FIG. 8 illustrates schematically how the mouse device 10 is operated according to the first embodiment of the present invention. As shown in the FIG. 8, when the user presses the button 104 of the mouse device 10, the button 104 is depressed down with respect to the shell 101, and the percussion component 1041 and the push block 105 both disposed on the button 104 move down together therewith. At the same time, the push block 105 touches and triggers the electrical switch 103 to send an electrical signal to the computer system. Then the computer system generates a click event on the screen of the display in response to the electrical signal. When the user releases the button 104, the electrical switch 103 on the circuit board 102 is electrically cutoff, and the electrical switch 103 will generate a feedback force in response to the foregoing pressure. The button 104 will revert to its original rest state. Thus a mouse-click motion is completed.

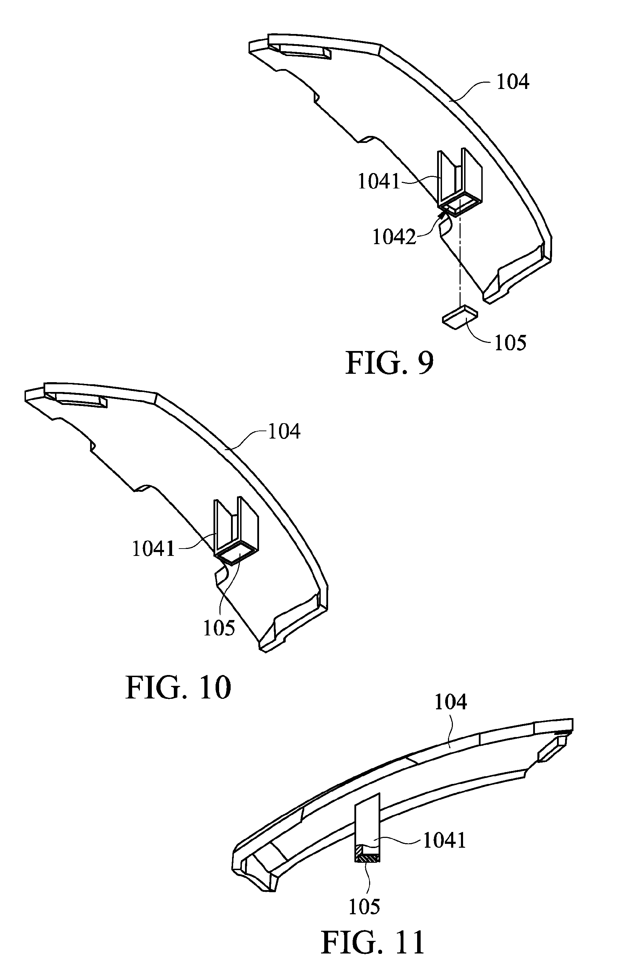

FIGs. 9 to 11 are different enlarged views of the mouse device 10 according to the second embodiment of the present invention. As shown in the figures, the mouse device 10 in the second embodiment is basically similar to that in the first embodiment except that the percussion component 1041 in the second embodiment further includes a notch 1042 on the surface of the percussion component 1041. The notch 1042 is consistent with the push block 105 in size so that the push block 105 can be embedded in the notch 1042 firmly. Part of the push block 105 is exposed from the surface of the percussion component 1041, Alternatively, the push block 105 can be fixed in the notch 1042 further by adhesion and part thereof is exposed from the surface of the percussion component 1041.

The reason for the push block 105 to be fixed in/on the percussion component 1041 firmly is for avoiding separation of the push block 105 from the percussion component 1041 after long-term use of the button. It is noted that part of the push block 105 is exposed from the surface of the percussion component 1041 in this embodiment only for illustration, and the present invention is not limited thereto. In other words, the push block 105 may be embedded completely in the notch 1042 to be flush with the surface of the percussion component 1041.

The method of operating the mouse device 10 in the second embodiment is the same as that in the first embodiment and will not be repeated here.

The present invention is featured by the push block 105 with higher hardness disposed on the button 104, unlike the conventional operation in which the button 104 triggers the electrical switch 103 directly. Because of the high hardness of the push block 105, it will not readily be sunken or distorted after long-term use. In addition, the button 104 is prevented from getting stuck with the electrical switch 103 regardless of the deformation of the percussion component 1041. Hence, the mouse device 10 of the invention is kept as sensitive as possible and has a prolonged service life.

Furthermore, since the push block 105 of the present invention is disposed in/on the button 104 by simple adhesion or embedding, no additional change has to be made to the original mouse device 10. However, the manufacturers may form integrally the push block 105 and the existing mouse device to reduce the manufacturing cost.

While the disclosure has been described in terms of what is presently consider to be the preferred embodiments, it is to be understood that the disclosure shall not be limited to the disclosed embodiment. On the contrary, it is intended to cover various modifications and similar arrangements included within the spirit and scope of the appended claims which are to be accorded with the broadest interpretation so as to encompass all such modification and similar structures. It is therefore intended by the appended claims to define the true scope of the invention.

## Claims

1. A mouse device (10), **characterized by** comprising:
a shell (101);
a circuit board (102) disposed within the shell (101);
an electrical switch (103) electrically configured on the circuit board (102);
a button (104) disposed on the shell (101) and facing the electrical switch (103), the button (104) being configured to move with respect to the shell (101) and optionally trigger the electrical switch (103); and
a push block (105) disposed on the button (104) and facing the electrical switch (103), hardness of the push block (105) is substantially higher than that of the button (104), wherein when the button (104) triggers the electrical switch (103), the push block (105) presses against the electrical switch (103).

2. The mouse device (10) according to claim 1, **characterized in that** the button (104) further comprises a percussion component (1041) facing the electrical switch (103), and the push block (105) is disposed on a surface of the percussion component (1041).

3. The mouse device (10) according to claim 2, **characterized in that** the percussion component (1041) further comprises a notch (1042), the push block (105) is disposed in the notch (1042) on the surface of the percussion component (1041).

4. The mouse device (10) according to claim 3, **characterized in that** the push block (105) is consistent with the notch (1042) in size so that the push block (105) is embedded in the notch (1042).

5. The mouse device (10) according to claim 3, **characterized in that** the push block (105) is disposed in the notch (1042) by adhesion.

6. The mouse device (10) according to claim 2, **characterized in that** the push block (105) is disposed on the surface of the percussion component (1041) by adhesion.

7. The mouse device (10) according to claim 1, **characterized in that** the push block (105) is made of metal, plastic-steel, Nylon or Teflon, and the button (104) is made of plastic.

8. The mouse device (10) according to claim 1, **characterized by** further comprising a wheel (106) disposed on the shell (101).
